# FASCICULE DE BREVET EUROPEEN

(11) **EP 2 558 693 B1**
(45) Date de publication et mention de la délivrance du brevet: **28.12.2016**
(21) Numéro de dépôt: 11715583.8
(22) Date de dépôt: 21.03.2011
(51) Int. Cl.: F01N 3/20

(54) **STRATÉGIE DE PILOTAGE DE PHASE DE PURGE SUR SYSTÈME DE REDUCTION CATALYTIQUE SELECTIVE**
SPÜLPHASENSTEUERUNGSVERFAHREN FÜR EIN AUSGEWÄHLTES KATALYTISCHES REDUKTIONSSYSTEM
PURGE PHASE CONTROL STRATEGY FOR A SELECTED CATALYTIC REDUCTION SYSTEM

(30) Priorité: 13.04.2010 FR 1052814
(43) Date de publication de la demande: 20.02.2013
(73) Titulaire: Peugeot Citroën Automobiles SA, 78140 Vélizy Villacoublay (FR)
(72) Inventeur: SABY, Marie-Pierre, F-78990 Elancourt (FR); LEE, Eric, F-94210 La Varenne Saint Hilaire (FR); GEORGIADIS, Evangelos, F-75013 Paris (FR)
(86) Numéro de dépôt international: PCT/FR2011/050573
(87) Numéro de publication internationale: WO 2011/128542

(56) Documents cités:
- WO-A1-2008/006840
- FR-A1- 2 917 791
- FR-A1- 2 921 105

## Description

La présente invention concerne un procédé de contrôle de purge d'un système de réduction catalytique sélective pour véhicule.

Dans un contexte de dépollution des gaz d'échappement d'un moteur diesel, les systèmes de réduction catalytique sélective (ou SCR pour « Selective Catalyst Réduction » en anglais) ont pour but de réduire les oxydes d'azote (NO_{X}) contenus dans les gaz d'échappement. Le système SCR utilise une réaction chimique entre ces mêmes NO_{X} et un réducteur. Classiquement le réducteur est de l'ammoniac (NH₃). L'ammoniac est injecté à la ligne d'échappement des gaz. L'injection de l'ammoniac peut être réalisée par l'intermédiaire d'une autre espèce chimique telle que l'urée.

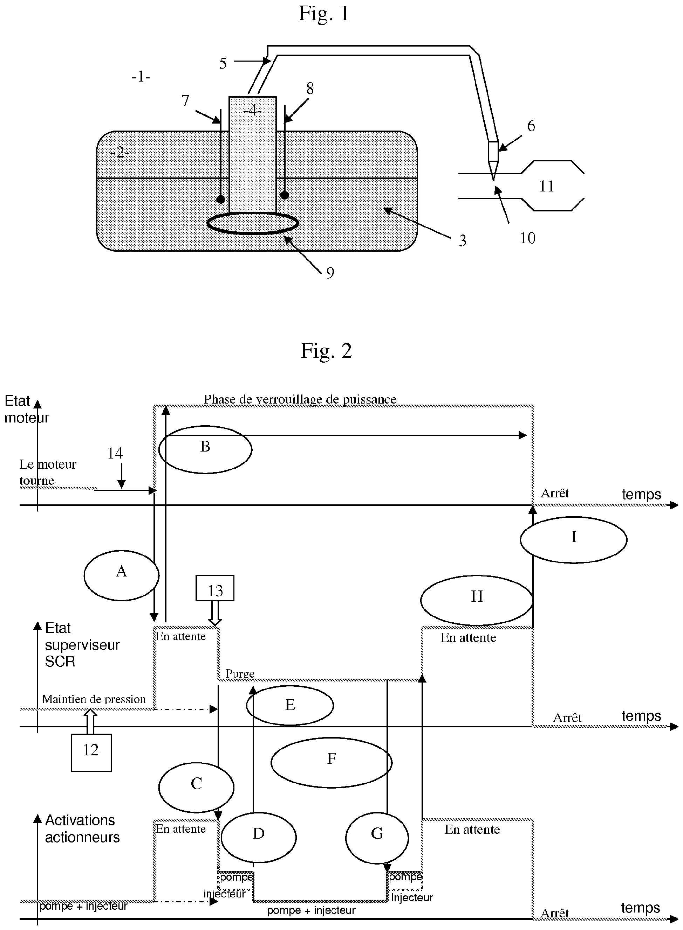

Les systèmes actuels de dépollution demandent un système SCR pouvant amener le réducteur au niveau de l'injecteur dans des conditions adéquates d'injection. Un exemple de système SCR est présenté en figure 1. Le système SCR 1 est composé d'un ou plusieurs réservoirs 2 pour stocker le réducteur 3, d'une pompe 4, d'une ou plusieurs canalisations 5 et d'un injecteur 6. La canalisation 5 peut être chauffante. Les réservoirs 2 comprennent également un capteur de niveau 7, un capteur de température 8 et au moins un élément chauffant 9. La canalisation 5 permet d'amener le réducteur 3 dans la ligne d'échappement 10 du véhicule avant le catalyseur 11 du système SCR 1. A la fin de chaque roulage (fonctionnement du véhicule), les canalisations 5, l'injecteur 6 et/ou la pompe 4 (ou une partie de celle-ci) peuvent être vidés de leur réducteur 3. Ainsi lorsque ces composants sont sensibles au froid, la purge du réducteur 3 permet de ne pas créer de dommages en cas de gel pendant la période d'arrêt du véhicule. Pendant la phase de purge, le réducteur 3 contenu dans ces composants retourne dans le réservoir 2, remplacé par un fluide de purge (air ou gaz d'échappement). Ce procédé de purge peut être réalisé, par exemple, en faisant tourner la pompe 4 en sens inverse et en ouvrant un dispositif d'aspiration. Le dispositif d'aspiration peut être l'injecteur 6 afin de substituer au réducteur 3 les gaz d'échappement.

Dans un véhicule, après la coupure clé, débute une phase de vie où le calculateur du moteur et les actionneurs du groupe moto-propulseur sont maintenus alimentés par la batterie le temps de réaliser les enregistrements, les mises à jour et la phase de post-refroidissement nécessaires. La phase de purge est réalisée pendant cette phase de vie appelée phase de verrouillage de puissance (ou « Powerlatch » en anglais). Cette phase de verrouillage de puissance doit être la plus courte possible afin d'éviter les courts-circuits aggravés.

Le document FR-A-2 921 105 décrit une procédure de purge comprenant l'activation et/ou la désactivation du fonctionnement de la pompe et du dispositif d'aspiration de manière séquentielle. Cependant le document ne décrit pas un procédé permettant de minimiser la phase de verrouillage de puissance.

Le document FR 2917971 A décrit aussi un système SCR avec une purge par aspiration.

Il existe donc un besoin pour un procédé de contrôle de la phase de purge permettant de minimiser la phase de verrouillage de puissance.

Pour cela, l'invention propose un procédé de contrôle de purge d'un système de réduction catalytique sélective pour un véhicule, le système de réduction catalytique sélective ayant une pompe de réducteur, au moins une canalisation d'alimentation en réducteur d'une ligne d'échappement du véhicule, et un dispositif d'aspiration de fluide de purge, caractérisé en ce que le procédé comprend la détermination d'une durée de purge en fonction d'un état de remplissage de la canalisation d'alimentation avant l'activation de la purge, et en ce que le procédé comprend en outre la mise à jour de la durée estimée de purge pendant la purge.

Selon une variante, le procédé est caractérisé en que l'état de remplissage de la canalisation d'alimentation est déterminé par le pourcentage ou le volume de réducteur contenu dans la canalisation d'alimentation en réducteur.

Selon une variante, le procédé est caractérisé en ce que la mise à jour de la durée de la purge est fonction de l'état de contact de la pompe avec l'air et/ou de la pression à la sortie de la pompe.

Selon une variante, le procédé est caractérisé en ce que l'état de contact de la pompe avec l'air est déterminé à l'aide d'une mesure du courant consommé par la pompe.

Selon une variante, le procédé est caractérisé en ce qu'il comprend en outre :
- la détermination de la cohérence entre deux des trois informations que sont la durée de purge, la mesure du courant consommé par la pompe, et la mesure de la pression à la sortie de la pompe,
- la réalisation d'un diagnostic sur l'état de fonctionnement des éléments du système de réduction catalytique sélective.

Selon une variante, le procédé est caractérisé en ce que la détermination de la durée de purge est aussi fonction de la pression au niveau du dispositif d'aspiration de fluide de purge.

Selon une variante, le procédé est caractérisé en ce que la purge du système de réduction catalytique sélective est activée en fonction d'au moins l'un des paramètres choisi parmi la température dans la ligne d'échappement du véhicule, ou le niveau de remplissage d'un réservoir de réducteur.

Selon une variante, le procédé est caractérisé en ce qu'il comprend en outre le calcul de l'état de remplissage de la canalisation d'alimentation tout au long de la purge, et l'enregistrement de l'état de remplissage de la canalisation lorsque la purge est désactivée.

Selon une variante, le procédé est caractérisé en ce qu'une activation de la purge comprend l'activation séquentielle de la pompe et du dispositif d'aspiration.

Selon une variante, le procédé est caractérisé en ce qu'une désactivation de la purge comprend la désactivation séquentielle de la pompe et du dispositif d'aspiration.

Selon une variante, le procédé est caractérisé en ce que la séquence d'activation ou de désactivation de la pompe et du dispositif d'aspiration est prédéterminée.

Selon une variante, le procédé est caractérisé en ce que le dispositif d'aspiration est un injecteur de réducteur ou une valve.

L'invention concerne également un système de réduction catalytique sélective pour véhicule, comprenant une pompe de réducteur, au moins une canalisation d'alimentation en réducteur d'une ligne d'échappement du véhicule, et un dispositif d'aspiration de fluide de purge, caractérisé en ce qu'il comprend un contrôleur mettant en oeuvre le procédé selon l'invention.

L'invention concerne également un véhicule comprenant une ligne d'échappement caractérisé en ce qu'il comprend un système de réduction catalytique sélective selon l'invention.

D'autres caractéristiques et avantages de l'invention apparaîtront à la lecture de la description détaillée qui suit des modes de réalisation de l'invention, donnés à titre d'exemple uniquement et en référence aux dessins qui montrent :
- figure 1, déjà décrite, présentant un exemple de système SCR.
- Figure 2, un schéma explicatif d'un exemple de procédé selon l'invention.

L'invention est un procédé de contrôle de purge d'un système de réduction catalytique sélective 1 pour un véhicule. Selon la figure 1, le système SCR 1 présente une pompe 4 de réducteur 3, au moins une canalisation d'alimentation 5 en réducteur dans une ligne d'échappement 10 du véhicule et un dispositif d'aspiration de fluide de purge. Le procédé de l'invention comprend la détermination d'une durée de purge en fonction d'un état de remplissage de la canalisation d'alimentation 5 avant l'activation de la purge. Le procédé comprend en outre la mise à jour de la durée de purge pendant la purge.

Dans ce qui suit, le remplissage de la canalisation d'alimentation 5 est le pourcentage ou volume de réducteur 3 contenu à l'intérieur de la canalisation 5. Ceci peut être déterminé en fonction du nombre de rotations de la pompe ou de sa durée de fonctionnement. Le dispositif d'aspiration peut être est un injecteur 6 de réducteur 3 dans la ligne d'échappement 10 du véhicule. Le fluide de purge est alors composé des gaz d'échappement du véhicule. Alternativement le dispositif d'aspiration peut-être une valve, par laquelle de l'air est aspiré en tant que fluide de purge. La valve est par exemple portée par l'injecteur 6.

Le procédé de l'invention permet de contrôler la purge d'un système SCR avec une gestion au plus juste du maintien sous tension des calculateurs et actionneurs nécessaires au déroulement de cette purge. Ainsi le procédé permet d'obtenir une durée de phase de verrouillage de puissance la plus courte possible afin d'éviter les courts-circuits aggravés, et de minimiser la consommation en énergie du véhicule. Le procédé permet un contrôle générique de la sécurité des canalisations d'alimentation, tout en évitant les risques suscités par une durée de verrouillage de puissance trop longue.

Le procédé de contrôle de purge selon l'invention permet de gérer la purge de plusieurs types de système SCR. Le procédé est utilisable en cas de présence ou d'absence d'un capteur de pression en sortie de la pompe 4, en sortie de la canalisation d'alimentation 5, ou au niveau de l'injecteur 6 dans la ligne d'échappement 10 du véhicule. Le procédé est adapté à des systèmes SCR 1 présentant différents positionnements du catalyseur SCR 11 dans la ligne d'échappement 10. Le procédé est adapté à un système SCR 1 utilisant l'air ou le gaz d'échappement comme fluide de purge. Le procédé est avantageusement utilisé dans un système SCR dépourvu de capteur de pression.

Les étapes du procédé selon l'invention seront mieux comprises en référence à la figure 2. La figure décrit un exemple du procédé selon l'invention mis en oeuvre par un superviseur ou contrôleur du système SCR 1, et dans lequel le dispositif d'aspiration est l'injecteur 6. La figure 2 présente sur trois axes temporels les états respectifs du moteur du véhicule, du contrôleur du système SCR 1, et des actionneurs mis en oeuvre lors de la purge.

Lors du fonctionnement du véhicule, le moteur tourne, le contrôleur du maintient le système SCR sous pression. La pompe 4 et l'injecteur 6 du réducteur 3 sont activés.

A l'étape A, la référence 14 indique un arrêt du potentiel du moteur impliquant un besoin de purge préactivé. Autrement dit, l'arrêt du moteur (arrêt du potentiel du moteur) indique le besoin d'une purge. Si la clé de contact n'indique pas un arrêt de l'alimentation du véhicule (la clé de contact peut être en position « accessoires » sur un exemple de véhicule) le processus d'autorisation de la purge est déclenché après un arrêt prolongé du moteur (éventuellement à partir de la température à l'échappement). Alternativement le processus d'autorisation de la purge peut être déclenché par la coupure clé, c'est-à-dire une position de la clé indiquant un arrêt de l'alimentation du véhicule. La coupure clé vient alors confirmer le besoin de purge préactivé par l'arrêt du moteur. Si le besoin de purge est confirmé on procède à l'étape suivante. Un défaut de réchauffage peut aussi pré-activer un besoin de purge.

A l'étape B, le contrôleur demande le maintien de l'état du moteur en phase de verrouillage de puissance, puis passe en attente. La pompe 4 et l'injecteur 6 sont en attente.

A l'étape C, la purge du système SCR 1 est autorisée à un instant calculé selon la référence 12. La référence 12 correspond à un examen de la température à l'échappement, du remplissage du réservoir 2, ou de la canalisation d'alimentation 5 afin de calculer l'instant d'autorisation de la purge. Autrement dit la purge est autorisée en fonction de paramètres du système SCR 1 acquis à partir de l'arrêt du moteur. La purge peut être autorisée en fonction du niveau de remplissage du réservoir 2 de réducteur 3, ou du remplissage de la canalisation d'alimentation 5 à l'arrêt du moteur. Si ces composants ne présentent pas de réducteur 3, on ne procède pas à la purge. La purge peut également être autorisée en fonction des conditions dans la ligne d'échappement 10 du véhicule, la température des gaz d'échappement par exemple. Ceci est en particulier le cas lorsque le dispositif d'aspiration est l'injecteur 6 du système SCR. La purge peut être alors activée lorsque la température des gaz d'échappement est suffisamment faible pour que les composants (canalisation 5, pompe 4, capteurs 7, 8) du système SCR 1 ne soient pas endommagés.

A l'étape D, la pompe 4 et l'injecteur 6 sont activés de manière séquentielle. L'ordre d'activation peut être prédéterminé, ou choisi lors de la mise en oeuvre du procédé.

A l'étape E, la pompe 4 et l'injecteur 6 ont été activés, le décompte de la durée de purge commence. La durée de purge est estimée selon la référence 13. La référence 13 correspond à un examen de la pression à l'échappement, de la capacité de la pompe 4, ou du remplissage de la canalisation d'alimentation 5 afin d'estimer la durée de purge. Autrement dit la durée de purge (ou temporisation) est déterminée en fonction de paramètres du système SCR 1, et/ou du véhicule acquis avant l'activation de la purge. La durée de purge peut être déterminée en fonction de la longueur de la canalisation d'alimentation 5. En particulier la durée de purge peut être déterminée en fonction de l'état de remplissage de la canalisation d'alimentation 5 avant l'activation de la purge. La durée de purge peut également être fonction de la pression au niveau du dispositif d'aspiration du fluide de purge. Dans le cas où le dispositif d'aspiration est l'injecteur 6, la durée de purge peut être fonction de la pression à l'échappement, c'est-à-dire au niveau de l'injecteur 6 dans la ligne d'échappement 10. La pression peut être déterminée à partir d'un capteur au voisinage de l'injecteur 6, d'un modèle associé à des capteurs positionnés dans la ligne d'échappement 10 à distance de l'injecteur 10, ou à partir d'un modèle du moteur du véhicule. Dans le cas où le dispositif d'aspiration est une valve, la durée de purge peut être fonction de la pression atmosphérique. La durée de purge peut également être fonction de la capacité de la pompe 4.

L'étape F se déroule pendant la purge du système SCR 1, et consiste à faire la synthèse de la temporisation. Ceci consiste à mettre à jour la durée de la purge. La mise à jour de la durée de la purge peut être fonction de l'état de contact de la pompe 4 avec l'air (ou plus généralement l'état de contact avec le fluide de purge) et potentiellement d'une donnée de pression à la sortie de la pompe 4. Sur certaines technologies de pompe, l'état de contact de la pompe 4 avec l'air (ou plus généralement avec le fluide de purge) peut être déterminé à l'aide d'une mesure du courant consommé par la pompe 4. En effet la résistance à l'aspiration du fluide de purge est différente de celle du réducteur. Il en résulte une différence de consommation de la pompe 4. Ces données de mise à jour peuvent être combinées. La durée de purge peut être mise à jour à partir d'autres paramètres du système SCR 1 et/ou du véhicule, telle que la pression dans la canalisation d'alimentation 5.

Dans un mode de réalisation le procédé comprend en outre la détermination de la cohérence entre deux des trois informations que sont la durée de purge, la mesure du courant consommé par la pompe 4, et la mesure de la pression à la sortie de la pompe 4. A partir de ces paramètres un diagnostic sur l'état de fonctionnement des éléments du système SCR 1 peut être réalisé. Par exemple, si la pression au terme de la durée maximale estimée de purge correspond à celle de l'air, mais que le courant de la pompe 4 est élevé, on peut en déduire que la purge est défaillante, (soit à cause de la pompe 4, soit à cause d'un dispositif d'aspiration bloqué, d'autres causes sont possible ; elles dépendent des choix des organes du système SCR).

A l'étape G, la pompe 4 et l'injecteur 6 sont désactivés de manière séquentielle. L'ordre de désactivation peut être prédéterminé, ou choisi lors de la mise en oeuvre du procédé.

A l'étape H le contrôleur, la pompe 4, et l'injecteur 6 sont en attente. Le procédé peut comprendre le calcul de l'état de remplissage de la canalisation d'alimentation 5 tout au long de la purge, et l'enregistrement à l'étape H, de l'état de remplissage de la canalisation 5 dès que la purge est désactivée. Une désactivation peut être due au fait que la durée de purge est arrivée à son terme. Alternativement la désactivation peut être une interruption brutale de la purge avant le terme de la durée de purge. L'interruption brutale de la purge peut se produire à la suite de l'introduction de la clé de contact par un utilisateur du véhicule, d'un redémarrage du moteur du véhicule, d'un temps écourté de la phase de verrouillage de puissance, ou encore à cause d'un dysfonctionnement d'un des actionneurs réalisant la purge. Dans le cas d'une interruption brutale de la purge, on passe directement à l'étape H quelque soit l'étape du procédé en cours.

L'état de remplissage enregistré peut être utilisé pour la mise en oeuvre d'une procédure d'amorçage ultérieure permettant le remplissage du système SCR 1 par le réducteur 3.

A l'étape I, une fois toutes les opérations précédentes réalisées le contrôleur désactive le maintien du moteur en phase de verrouillage de puissance.

Le procédé a été décrit pour un exemple de purge réalisée par l'aspiration des gaz d'échappement par l'injecteur 6. Cependant le procédé est aussi adapté à une purge réalisée par l'aspiration d'air à l'aide d'une valve. Lorsque le dispositif d'aspiration est une valve, les étapes A, B, D et F à I restent identiques à celles précédemment décrites. A l'étape C, la purge du système SCR 1 est autorisée à un instant calculé selon la référence 12. La référence 12 correspond à un examen du remplissage du réservoir 2, ou de la canalisation d'alimentation 5 afin de calculer l'instant d'autorisation de la purge. Autrement dit la purge peut être autorisée en fonction du niveau de remplissage du réservoir 2 de réducteur 3, ou du remplissage de la canalisation d'alimentation 5 acquis à partir de l'arrêt du moteur. L'autorisation de purge n'est pas obtenue à partir des conditions dans la ligne d'échappement 10 du véhicule. A l'étape E, la durée de purge est estimée selon la référence 13. La référence 13 correspond à un examen de la pression atmosphérique, de la capacité de la pompe 4, ou du remplissage de la canalisation d'alimentation 5 afin d'estimer la durée de purge (ou temporisation). Autrement dit la durée de purge peut être fonction de l'état de remplissage de la canalisation d'alimentation 5, ou de la pression atmosphérique acquis avant l'activation de la purge.

L'invention concerne également un système de réduction catalytique sélective 1 pour véhicule, comprenant un contrôleur mettant en oeuvre le procédé selon l'invention. Le système SCR selon l'invention présente les caractéristiques décrites précédemment.

L'invention concerne également un véhicule comprenant un système de réduction catalytique selon l'invention.

## Revendications

1. Procédé de contrôle de purge d'un système de réduction catalytique sélective (1) pour un véhicule, le système de réduction catalytique sélective (1) ayant une pompe (4) de réducteur (3), au moins une canalisation d'alimentation (5) en réducteur (3) d'une ligne d'échappement (10) du véhicule, et un dispositif d'aspiration de fluide de purge,
**caractérisé en ce que** le procédé comprend la détermination d'une durée de purge en fonction d'un état de remplissage de la canalisation d'alimentation (5) avant l'activation de la purge, et **en ce que** le procédé comprend en outre la mise à jour de la durée de purge pendant la purge.

2. Procédé selon la revendication 1 caractérisé en que l'état de remplissage de la canalisation d'alimentation (5) est déterminé par le pourcentage ou le volume de réducteur (3) contenu dans la canalisation d'alimentation (5) en réducteur (3).

3. Le procédé selon la revendication 1 ou 2, **caractérisé en ce que** la mise à jour de la durée de la purge est fonction de l'état de contact de la pompe (4) avec l'air et/ou de la pression à la sortie de la pompe (4).

4. Procédé selon la revendication 3, **caractérisé en ce que** l'état de contact de la pompe (4) avec l'air est déterminé à l'aide d'une mesure du courant consommé par la pompe (4).

5. Procédé selon la revendication 4, **caractérisé en ce que** le procédé comprend en outre :
• la détermination de la cohérence entre deux des trois informations que sont la durée de purge, la mesure du courant consommé par la pompe (4), et la mesure de la pression à la sortie de la pompe (4)
• la réalisation d'un diagnostic sur l'état de fonctionnement des éléments du système de réduction catalytique sélective (1).

6. Procédé selon l'une des revendications 1 à 5, **caractérisé en ce que** la détermination de la durée de purge est aussi fonction de la pression au niveau du dispositif d'aspiration de fluide de purge.

7. Procédé selon l'une des revendications 1 à 6, **caractérisé en ce que** la purge du système de réduction catalytique sélective (1) est activée en fonction d'au moins l'un des paramètres choisi parmi la température dans la ligne d'échappement (10) du véhicule, ou le niveau de remplissage d'un réservoir (2) de réducteur (3).

8. Procédé selon l'une des revendications 1 à 7, **caractérisé en ce que** le procédé comprend en outre le calcul de l'état de remplissage de la canalisation d'alimentation (5) tout au long de la purge, et l'enregistrement de l'état de remplissage de la canalisation (5) lorsque la purge est désactivée.

9. Procédé selon l'une des revendications 1 à 8, **caractérisé en ce qu'**une activation de la purge comprend l'activation séquentielle de la pompe (4) et du dispositif d'aspiration.

10. Procédé selon l'une des revendications 1 à 9, **caractérisé en ce qu'**une désactivation de la purge comprend la désactivation séquentielle de la pompe (4) et du dispositif d'aspiration.

11. Procédé selon l'une des revendications 9 ou 10, **caractérisé en ce que** la séquence d'activation ou de désactivation de la pompe (4) et du dispositif d'aspiration est prédéterminée.

12. Procédé selon l'une des revendications 1 à 11, **caractérisé en ce que** le dispositif d'aspiration est un injecteur (6) de réducteur (3) ou une valve.

13. Système de réduction catalytique sélective (1) pour véhicule, comprenant une pompe (4) de réducteur (3), au moins une canalisation d'alimentation (5) en réducteur (3) d'une ligne d'échappement (10) du véhicule, et un dispositif d'aspiration de fluide de purge, **caractérisé en ce qu'**il comprend un contrôleur mettant en oeuvre le procédé selon l'une quelconque des revendications 1 à 12.

14. Véhicule comprenant une ligne d'échappement (10) **caractérisé en ce qu'**il comprend un système de réduction catalytique sélective (1) selon la revendication 13.

## Patentansprüche

1. Spülsteuerungsverfahren eines selektiven katalytischen Reduktionssystems (1) für ein Fahrzeug, wobei das selektive katalytische Reduktionssystem (1) eine Pumpe (4) für Reduktionsmittel (3), mindestens eine Zufuhrkanalisation (5) für Reduktionsmittel (3) eines Abgasstrangs (10) des Fahrzeugs und eine Spülfluidansaugvorrichtung hat, **dadurch gekennzeichnet, dass** das Verfahren das Bestimmen einer Spüldauer in Abhängigkeit von einem Füllzustand der Zufuhrkanalisation (5) vor dem Betätigen umfasst, und dass das Verfahren außerdem die Aktualisierung der Entleerungsdauer während des Spülens umfasst.

2. Verfahren nach Anspruch 1, **dadurch gekennzeichnet, dass** der Füllzustand der Zufuhrkanalisation (5) durch den Prozentsatz oder das Volumen an Reduktionsmittel (3) bestimmt wird, der/das in der Zufuhrkanalisation (5) für Reduktionsmittel (3) enthalten ist.

3. Verfahren nach Anspruch 1 oder 2, **dadurch gekennzeichnet, dass** die Aktualisierung der Spüldauer von dem Berührungszustand der Pumpe (4) mit der Luft und/oder dem Druck an dem Ausgang der Pumpe (4) abhängt.

4. Verfahren nach Anspruch 3, **dadurch gekennzeichnet, dass** der Berührungszustand der Pumpe (4) mit der Luft mit Hilfe einer Messung des von der Pumpe (4) verbrauchten Stroms bestimmt wird.

5. Verfahren nach Anspruch 4, **dadurch gekennzeichnet, dass** das Verfahren außerdem Folgendes umfasst:
• die Bestimmung der Kohärenz zwischen zwei der drei Informationen, die die Spüldauer, die Messung des von der Pumpe (4) verbrauchten Stroms und die Messung des Drucks am Ausgang der Pumpe (4) sind
• die Ausführung einer Diagnose des Betriebszustands der Elemente des selektiven katalytischen Reduktionssystems (1).

6. Verfahren nach einem der Ansprüche 1 bis 5, **dadurch gekennzeichnet, dass** die Bestimmung der Spüldauer auch von dem Druck im Bereich der Spülfluidansaugvorrichtung abhängt.

7. Verfahren nach einem der Ansprüche 1 bis 6, **dadurch gekennzeichnet, dass** das Spülen des selektiven katalytischen Reduktionssystems (1) in Abhängigkeit von mindestens einem der Parameter aktiviert wird, die aus der Temperatur in dem Abgasstrang (10) des Fahrzeugs oder dem Füllstand eines Behälters (2) für Reduktionsmittel (3) aktiviert wird.

8. Verfahren nach einem der Ansprüche 1 bis 7, **dadurch gekennzeichnet, dass** das Verfahren außerdem die Berechnung des Füllzustands der Zufuhrkanalisation (5) während der gesamten Spülung sowie das Aufzeichnen des Füllzustands der Kanalisation (5), wenn das Spülen deaktiviert wird, umfasst.

9. Verfahren nach einem der Ansprüche 1 bis 8, **dadurch gekennzeichnet, dass** eine Aktivierung der Spülung das sequenzielle Aktivieren der Pumpe (4) und der Ansaugvorrichtung umfasst.

10. Verfahren nach einem der Ansprüche 1 bis 9, **dadurch gekennzeichnet, dass** eine Deaktivierung der Pumpe das sequenzielle Deaktivieren der Pumpe (4) und der Ansaugvorrichtung umfasst.

11. Verfahren nach einem der Ansprüche 9 oder 10, **dadurch gekennzeichnet, dass** die Aktivierungs- oder Deaktivierungssequenz der Pumpe (4) und der Ansaugvorrichtung vorbestimmt ist.

12. Verfahren nach einem der Ansprüche 1 bis 11, **dadurch gekennzeichnet, dass** die Ansaugvorrichtung eine Einspritzdüse (6) für Reduktionsmittel (3) oder ein Ventil ist.

13. Selektives katalytisches Reduktionssystem (1) für Fahrzeug, das eine Pumpe (4) für Reduktionsmittel (3), mindestens eine Zufuhrkanalisation (5) für Reduktionsmittel (3) eines Abgasstrangs (10) des Fahrzeugs sowie eine Spülfluidansaugvorrichtung umfasst, **dadurch gekennzeichnet, dass** es eine Steuervorrichtung umfasst, die das Verfahren nach einem der Ansprüche 1 bis 12 umsetzt.

14. Fahrzeug, das einen Abgasstrang (10) umfasst, **dadurch gekennzeichnet, dass** es ein selektives katalytisches Reduktionssystem (1) nach Anspruch 13 umfasst.

## Claims

1. A purge control method for a selective catalytic reduction system (1) for a vehicle, the selective catalytic reduction system (1) having a pump (4) for reducing agent (3), at least one supply line (5) supplying reducing agent (3) to an exhaust line (10) of the vehicle, and a purge fluid suction device,
**characterized in that** the method includes determining a purge duration as a function of a state of fill of the supply line (5) prior to the activation of the purge, and **in that** the method further includes the updating of the purge duration during purging.

2. The method according to Claim 1, **characterized in that** the filling state of the supply line (5) is determined by the percentage or the volume of reducing agent (3) contained in the supply line (5) for the reducing agent (3).

3. The method according to Claim 1 or 2, **characterized in that** the updating of the purge is a function of the state of contact of the pump (4) with the air and/or of the pressure at the outlet of the pump (4).

4. The method according to Claim 3, **characterized in that** the state of contact of the pump (4) with the air is determined by means of a measurement of the current consumed by the pump (4).

5. The method according to Claim 4, **characterized in that** the method further includes:
• determining the consistency between two of the three pieces of information which are the purge duration, the measurement of the current consumed by the pump (4), and the measurement of the pressure at the outlet of the pump (4)
• performing a diagnosis on the state of operation of the elements of the selective catalytic reduction system (1).

6. The method according to one of Claims 1 to 5, **characterized in that** the determining of the purge duration is also a function of the pressure at the level of the purge fluid suction device.

7. The method according to one of Claims 1 to 6, **characterized in that** the purge of the selective catalytic reduction system (1) is activated as a function of at least one of the parameters selected from the temperature in the exhaust line (10) of the vehicle, or the filling level of a reservoir (2) of reducing agent (3).

8. The method according to one of Claims 1 to 7, **characterized in that** the method further includes the calculation of the filling state of the supply line (5) throughout the entire purge, and the recording of the filling state of the line (5) when the purge is deactivated.

9. The method according to one of Claims 1 to 8, **characterized in that** an activation of the purge includes the sequential activation of the pump (4) and of the suction device.

10. The method according to one of claims 1 to 9, **characterized in that** a deactivation of the purge includes the sequential deactivation of the pump (4) and of the suction device.

11. The method according to one of Claims 9 or 10, **characterized in that** the sequence of activation or deactivation of the pump (4) and of suction device is predetermined.

12. The method according to one of Claims 1 to 11, **characterized in that** the suction device is an injector (6) of reducing agent (3) or a valve.

13. A selective catalytic reduction system (1) for a vehicle, including a pump (4) for reducing agent (3), at least one supply line (5) for supplying reducing agent (3) to an exhaust line (10) of the vehicle, and a purge fluid suction device, **characterized in that** it includes a controller implementing the method according to any one of Claims 1 to 12.

14. A vehicle including an exhaust line (10), **characterized in that** it includes a selective catalytic reduction system (1) according to Claim 13.
